(19) Europäisches Patentamt
European Patent Office
Office européen des brevets

(11) **EP 0 744 449 A2**

(12) **EUROPÄISCHE PATENTANMELDUNG**

(43) Veröffentlichungstag:
27.11.1996 Patentblatt 1996/48

(51) Int. Cl.⁶: **C09D 101/10**, C09D 101/16

(21) Anmeldenummer: 96107421.8

(22) Anmeldetag: 09.05.1996

(84) Benannte Vertragsstaaten:
**AT BE CH DE DK FR IT LI NL SE**

(30) Priorität: **23.05.1995 DE 19518948**

(71) Anmelder: **Hesse GmbH & Co.**
**59075 Hamm (DE)**

(72) Erfinder:
• **Neumann, Wolfgang**
**59073 Hamm (DE)**

• **Kaminski, Ernst**
**32120 Hiddenhausen (DE)**
• **Hesse, Rolf**
**59065 Hamm (DE)**

(74) Vertreter: **KUHNEN, WACKER & PARTNER**
**Alois-Steinecker-Strasse 22**
**85354 Freising (DE)**

(54) **Wässrige, lagerstabile Überzugsmittel**

(57)    Die vorliegende Erfindung betrifft wäßrige, lagerstabile Überzugsmittel, insbesondere Lacke mit Celluloseestern, Kunst- und/oder Naturharzen und/oder Weichmachern, organischen Lösungsmitteln, Emulgatoren, Verdickungsmitteln und Wasser, gekennzeichnet durch ein Stabilisator-Tensid, welches eine siliciumorganische Verbindung ist, einem Emulgator, der ein nicht ionisches Tensid ist sowie einem Verdickungsmittel, das ein organisches Polymerharz ist. Die Erfindung stellt erstmals wäßrige, lagerstabile Überzugsmittel auf Celluloseester-Basis zur Verfügung mit denen es möglich ist, derartige Lack-Überzugsmittel mit Wassergehalten von bis zu 80 Gewichtsprozent herzustellen.

EP 0 744 449 A2

**Beschreibung**

Die vorliegende Erfindung betrifft wäßrige, lagerstabile Überzugsmittel gemäß dem Oberbegriff des Patentanspruchs 1.

Lacke und Lackfarben auf Basis von Celluloseester, sogenannte Celluloselacke, werden seit vielen Jahrzehnten in großen Mengen für den Überzug beziehungsweise die Beschichtung von Holzwerkstoffen, Möbeln, Leder, Kunststoffen, Folien, Glas usw. eingesetzt.

Diese Lacke des Standes der Technik weisen jedoch den Nachteil auf, daß sie aufgrund des relativ geringen Festkörpergehaltes von in der Regel zwischen 20 und 40 Gew.-% einen enorm hohen Lösungsmittelanteil aufweisen. Dieser Lösungsmittelanteil wird naturgemäß bei der Verarbeitung und Trocknung der Lacke an die Atmosphäre abgegeben. Dieser Umstand trägt nicht nur zur Belastung der Atmosphäre bei, sondern stellt einerseits auch einen gewichtigen Kostenfaktor dar, da teuere Lösungsmittel quasi nur als Vehikel oder Transportmittel zwischen Lackhersteller und Lackverarbeiter benutzt werden, und andererseits besteht ein nicht unbeachtliches Gefahrenpotential darin, daß die Materialien des Standes der Technik in der Regel leicht brennbar sind und beim Verarbeiten von größeren Mengen explosive Luft-Lösungsmittelgemische entstehen können.

Es hat daher im Verlaufe vieler Jahre nicht an Versuchen gefehlt, die in Celluloselacken verwendeten Lösungsmittel wenigstens teilweise durch Wasser zu ersetzen, was jedoch bislang nicht zum Erfolg führte.

So beschreibt beispielsweise bereits die DE-PS 918 286 die Herstellung von wäßrigen Nitrocelluloseemulsionen mit einem Trockengehalt von etwa 37 %, welche jedoch den Nachteil aufweisen, daß sich derartige Emulsionen bald nach der Herstellung wieder in eine wäßrige und eine organische Phase auftrennen.

Darüberhinaus offenbart die EP-B-0 076 443 ein Verfahren zur Herstellung von lagerstabilen wäßrigen Überzugsemulsionen des Öl-in-Wasser-Typs, deren organische Lösungsmittelkonzentration höchstens 25 % beträgt, auf der Grundlage eines zähflüssigen cellulosehaltigen Gemisches oder Paste, die aus Cellulosesubstanz, Harzen, Weichmacher, Emulgatoren, wenigstens einem organischen Lösungsmittel sowie Wasser besteht, wobei der Wasseranteil maximal 30 Gew.-% beträgt.

Der Nachteil dieses Gemisches liegt darin begründet, daß es sich bei den Gemischen dieses Standes der Technik um eine Grundlage aus einem zähflüssigen cellulosehaltigen Gemisch oder Paste handelt, deren Weiterverarbeitung zu einem Lack lediglich um eine Verdünnung erreicht werden kann, wodurch die Gefahr besteht, daß sich die Bestandteile wieder in die einzelnen nicht miteinander mischbaren Phasen trennen, so daß die Lagerstabilität nur begrenzt ist.

Desweiteren beschreibt die DE-A-33 24 904 lagerstabile Cellulosenitratdispersionen, welche einen höheren Wasseranteil aufweisen, wobei die wäßrige Dispersion zusammengesetzt ist aus Cellulosenitrat, Polyester und/oder Alkylharzen, Weichmacher, Emulgatoren, Wasser, wobei als anionenaktive Emulgatoren Carboxylate, Sulfate, Sulphonate, Phosphate, Phosphite oder Phosphonate von nicht-ionogenen oberflächenaktiven Alkyl-, Aryl-, Alkylarylglykolethern, acylierten bzw. alkylierten Alkanolaminpolyglykolethern oder Copolymerisaten aus Ethylenoxid und/oder Propylenoxid verwendet werden.

Derartige Cellulosenitratdispersionen werden zunächst in organischen Lösungsmitteln dispergiert und dann mit einer größeren Menge Wasser versetzt und nach der Dispersion in Wasser wird das organische Lösungsmittel unter vermindertem Druck abdestilliert, wobei eine wäßrige Dispersion mit einem Festkörpergehalt von ca. 41, 5 bis 43 % entsteht.

Bei diesem Verfahren ist es jedoch nachteilig, daß es aufwendig und sehr kostenintensiv ist, so daß das Produkt bislang auf dem Markt schon alleine aus wirtschaftlichen Gesichtspunkten nicht auftaucht.

Ein weiterer Nachteil ist, daß die Lagerstabilität durch die Störung des Gleichgewichts zwischen Wasser und den organischen Lösungsmitteln nachhaltig gestört wird und somit ein relativer instabiler Zustand der Dispersion entsteht, wodurch die Cellulosenitratdispersionen dieses Standes der Technik zur Phasentrennung neigen und andererseits diese Phasentrennung unter Umständen auch auf dem Substrat, auf welchen sie angewendet werden sollen auch zur Trennung neigen, so daß sich nur unbefriedigende Oberflächen mit diesem Material erzielen lassen.

Ausgehend von diesem Stand der Technik ist es daher Aufgabe der vorliegenden Erfindung wäßrige lagerstabile Überzugsmittel auf Celluloseesterbasis zur Verfügung zu stellen, welche zum einen einen hohen Wasseranteil haben und - neben ihrer Lagestabilität - bei der Anwendung auf den unterschiedlichsten Substraten zu ausgezeichneten Oberflächen führen.

Diese Aufgabe wird durch die kennzeichnenden Merkmale des Anspruchs 1 gelöst.

Dadurch, daß das Überzugsmittel zusätzlich ein Stabilisator-Tensid enthält, wobei das Stabilisator-Tensid eine siliziumorganische Verbindung ist, der Emulgator ein nichtionisches Tensid ist und das Verdickungsmittel ein organisches Polymerharz ist, wird es erstmals ermöglicht, ein wäßriges lagerstabiles Überzugsmittel zu erhalten, welches

wenigstens einen Celluloseester;
wenigstens ein Kunst- und/oder Naturharz und/oder einen Weichmacher;
wenigstens ein organisches Lösungsmittel;
wenigstens ein Tensid als Emulgator;
wenigstens ein Verdickungsmittel sowie Wasser enthält,

und

welches zum einen lagerstabil ist, zum anderen einen Lack mit hervorragenden Oberflächeneigenschaften bildet.

Insbesondere gewährleistet die Kombination aus siliziumorganischen Stabilisatortensid, nichtionischem Tensid als Emulgator und Verdickungsmittel aus einem organischem Polymerharz, das eine derartige Emulsion einerseits lagerstabil ist und andererseits mit Wassergehalten bis zu 80 Gew.-% herzustellen ist, so daß nur noch geringe Mengen an organischen Lösungsmitteln verwendet werden müssen, was einerseits umweltverträglich und andererseits das Gefahrenpotential derartiger Lack-Überzugsmittel aufgrund der Entflammbarkeit der organischen Lösungsmittel reduziert.

Als besonderer Vorteil ergibt sich dabei, daß bei Verwendung anderer Ester als Cellulosenitrat auch schwer entflammbare Lacke entstehen, welche teilweise bereits auch von den Brandschutzvorschriften gefordert werden.

Nach dem gleichen Verfahren lassen sich nicht nur Klarlacke sondern auch farbige wäßrige Überzugsmittel erzeugen, wobei für die Einfärbung lackübliche anorganische und organische Farbpigmente oder Pigmentpräparationen verwendet werden. Je nach Art und Menge der eingesetzten Pigmente können die Einfärbungen zwischen schwach lasierend und vollkommen deckend eingestellt werden. Ebenso ist es möglich, die gebräuchlichen anorganischen Füllstoffe mit einzuarbeiten, um bestimmte Eigenschaften wie Fülle, Deckkraft, Haftung und Schleifbarkeit zu verbessern.

In der Regel können die erfindungsgemäßen Überzugsmittel als Einkomponentenlacksysteme verwendet werden.

Grundsätzlich ist es jedoch auch möglich, die erfindungsgemäßen Überzugsmittel mit einer speziellen Härterkomponente zu versetzen, wobei insbesondere zur Härtung bzw. Polymerisation Polyisocyanate eingesetzt werden, wodurch Polyurethanverbindungen entstehen, welche das gesamte Lacksystem vernetzen und somit zu stark verbesserten Oberflächeneigenschaften, insbesondere mechanische und chemische Widerstandsfähigkeit, führen.

Gemäß der vorliegenden Erfindung gelingt es beispielsweise, Lackkonzentrate auf Basis von Celluloseacetobutyrat oder Celluloseacetopropionat und handelsüblichen Acrylatharzen und/oder Weichmachern, Keton-, Aldehyd- und anderen Harzen in stabile wäßrige Emulsionen zu überführen. Derartige einkomponentige, lösemittelhaltige Lacksysteme werden für solche Zwecke eingesetzt, wo die Eigenschaften der Nitrolacke nicht ausreichen, da die gebildeten Lackfilme im Vergleich zu den von Nitrolacken lichtbeständig und schwerentflammbar sind. Auch solche Lacke können erfindungsgemäß nun als Emulsionen mit einem Wassergehalt von über 40 Gew.-%, insbesondere über 50 Gew.-%, bevorzugt über 60 Gew.-%, besonders bevorzugt über 70 Gew.-%, weiter bevorzugt über 80 Gew.-%, hergestellt und verarbeitet werden.

Völlig überraschend war nun der Befund, daß solche einkomponentigen wäßrigen Emulsionen auf Basis von Cellulosenitrat oder Celluloseacetobutyrat bzw. -propionat mit speziellen in Wasser emulgierbaren Polyisocyanaten vermischt und dadurch gehärtet werden können. Dieser Härtungsmechanismus entspricht dem der konventionellen Polyurethanlacke und führt zu Lackfilmen mit erheblich verbesserten physikalischen und chemischen Eigenschaften. So wird z.B. die Abrieb-, Kratz-, Stoß- und Schlagfestigkeit im Vergleich zu den ungehärteten Lackfilmen wesentlich erhöht. Gleiches gilt für die Widerstandsfähigkeit gegen chemische Einflüsse, wobei insbesondere die Beständigkeit gegen Wasser und Ethanol - ein hauptsächlicher Mangel der emulgatorhaltigen wäßrigen Lacksysteme - hervorzuheben ist. Die mit dem Härter versetzten wäßrigen Überzugsmittel entsprechen in ihrem Eigenschaftsbild den klassischen lösungsmittelhaltigen Zweikomponenten-Polyurethanlacken, die in riesigen Mengen für nahezu alle Bereiche der Beschichtungstechnologie verwendet werden, z.B. für die Lackierung von Holz und Holzwerkstoffen, Metall, Kunststoff usw.

Mit den erfindungsgemäßen wäßrigen Zwei-komponentigen Überzugsmittel ist man in der Lage, 40-70 Gew.-% der üblicherweise eingesetzten organischen Lösemittel einzusparen und durch Wasser zu ersetzen und so einen wirkungsvollen Beitrag zur Emissionsminderung und zum Umweltschutz zu leisten. Als besonderer Vorteil wurde das leichte und problemlose Einrühren der Härterkomponente in den Stammlack gefunden, das spezielle Rührgeräte oder Zweikomponenten-Spritzanlagen unnötig macht. Als weitere Vorteile sind die hohe Klarheit der Lackfilme zu nennen (Wasserlacke auf Basis von Dispersionen neigen zum Verschleiern) und das "Anfeuerungsverhalten" auf Hölzern und Holzwerkstoffen, das den konventionellen Polyurethan-Lacken entspricht (Dispersionslacke führen aufgrund ihrer Alkalität und ihres anderen Benetzungsverhaltens auf bestimmten Holzarten zu Verfärbungen).

Die Unteransprüche stellen bevorzugte Ausführungsformen der Erfindung dar.

Eine bevorzugte Ausführungsform der Erfindung sind daher wasserhaltige einkomponentige Überzugsmittel, welche enthalten:

ca. 5-50 Gew.-%, vorzugsweise ca. 10-40 Gew.-% mindestens eines organischen Lösungsmittels,

ca. 0-30 Gew.-%, vorzugsweise ca. 0-15 Gew.-% Weichmacher,

ca. 0-40 Gew.-%, vorzugsweise ca. 5-30 Gew.-% Celluloseester,

ca. 0-40 Gew.-%, vorzugsweise ca. 0-30 Gew.-% lackübliche Kunst- und/oder Naturharze,

ca. 0-40 Gew.-%, vorzugsweise ca. 0-30 Gew.-% lackübliche anorganische und/oder organische Pigmente und/oder Füllstoffe,

ca. 0-5 Gew.-%, vorzugsweise ca. 0-3 Gew.-% Wachse und/oder Metallseifen,

ca. 0-5 Gew.-%, vorzugsweise ca. 0-3 Gew.-% Mattierungsmittel auf Kieselsäurebasis,

ca. 0,1-5 Gew.-%, vorzugsweise ca. 0,1-4 Gew.-% Emulgatoren,

ca. 0-5 Gew.-%, vorzugsweise ca. 0,1-3 Gew.-% Stabilisatoren,

ca. 0-5 Gew.-%, vorzugsweise ca. 0-4 Gew.-% Verdickungsmittel, und

ca. 5-80 Gew.-%, vorzugsweise ca. 20-70 Gew.-% Wasser.

wobei die Summe der Gew.-% 100,0 ergibt.

Eine weitere bevorzugte Ausführungsform der Erfindung sind ferner wasserhaltige zweikomponentige Überzugsmittel, die vorgenannte Zusammensetzung (Komponente A) und einen Polyurethanhärter (Komponente B) gemäß nachfolgend beschriebener Zusammensetzung, enthaltend:

Zusammensetzung der Härterkomponente B:

ca. 10-100 Gew.-%, vorzugsweise ca. 20-80 Gew.-% wasseremulgierbares Polyisocyanat mit reaktiven Isocyanatgruppen

ca. 0-90 Gew.-%, vorzugsweise ca. 20-80 Gew.-% mindestens eines organischen Lösungsmittels

wobei die Summe der Gew.-% 100 ergibt.

Die Härterkomponente B wird je nach Zusammensetzung und den zu erreichenden Eigenschaften der Lackfilme den Stammlacken A vor der Verarbeitung in Gewichtsverhältnissen von 1:50 bis 1:1 (Härter: Stammlack), vorzugsweise 1:25 bis 1:4 zugesetzt.

Weitere Vorteile und Merkmale der vorliegenden Erfindung ergeben sich aufgrund der Beschreibung von Beispielen:

Beispiele (Mengenangaben in Gewichts-%)

| Stammlacke | 1. | 2. | 3. |
|---|---|---|---|
| 3-Methoxy-n-butylacetat | 15,0 | 12,0 | 10,0 |
| n-Butylacetat | 5,0 | - | 1,0 |
| Ethoxypropylacetat | - | - | 8,0 |
| Diisononylphthalat | 1,0 | - | 2,0 |
| Rußpräparation, 18 %ig in Cellulosenitrat (CN):Dibutylphtalat 62:20 | - | - | 2,0 |
| CN-Wolle Normtyp 27 E, butanolfeucht | 15,0 | - | 13,0 |
| Erdnußalkydharz, 40 % Ölgehalt, 75 %ig in BAC | 10,0 | - | 10,0 |
| Celluloseacetobutyrat | - | 6,0 | - |
| Hydroxyacrylatharz, 1,3 % OH, 50 %ig in BAC | - | 28,0 | - |
| Alkylarylpolyglykolether 40 Mol EO, 70 %ig in W | 2,0 | 2,0 | 2,3 |
| Polyethermodifiziertes Polysiloxan | 0,5 | 0,5 | 0,5 |
| Wasser | 30,0 | 30,0 | 30,0 |
| Polyurethanverdicker, 35 %ig in PG/W 3:2 | 1,5 | 1,5 | 1,5 |
| Wasser | 20,0 | 20,0 | 19,7 |
| | | | |
| Gesamt: | 100,0 | 100,0 | 100,0 |

Die Herstellung der erfindungsgemäßen wäßrigen Überzugsmittel erfolgt in der Weise, daß sämtliche Komponenten mit Ausnahme des Wassers in der oben angegebenen Reihenfolge zu einer homogenen, hochviskosen Mischung verrührt werden. Zu diesem Gemisch wird unter sehr intensivem Rühren (Dissolver mit hoher Schergeschwindigkeit) zunächst die erste Portion des Wassers langsam zugegeben, wobei der Inversionspunkt überschritten wird, bei dem die Wasser-in-Öl-Emulsion in eine Öl-in-Wasser-Emulsion übergeht. Anschließend wird die zweite Portion Wasser mit dem darin enthaltenen Verdickungsmittel unter Rühren eingearbeitet. Es entstehen bei den Beispielen 1. und 2. milchig-weiße Emulsionen, bei Beispiel 3. eine schwarze Emulsion, die sich alle durch eine Lagerstabilität von mehreren Monaten auszeichnen und folgende Eigenschaften aufweisen:

| Beispiele | 1. | 2. | 3. |
|---|---|---|---|
| Festkörpergehalt in Gew.-% | 20,7 | 22,4 | 22,6 |
| Viskosität nach DIN 53211, 4-mm Becher in sec | ca. 50 | ca. 50 | ca. 50 |
| Glanzgrad (200 μm-Rakel auf Glas) bei 60°C | 85 | 80 | 85 |
| Staubtrocken (200 μm-Rakel auf Glas) in min. | 20 | 30 | 20 |
| Stapeltrocken (200 μm-Rakel auf Glas) in Std. | 2 | 5 | 2 |
| Beständigkeit nach DIN 68861, Beanspruchungsgruppe 1 C: | erfüllt | erfüllt | erfüllt |
| Möbelfakta R 4: | erfüllt | erfüllt | erfüllt |

Härter für Zweikomponentenlack:

Wasseremulgierbares, aliphatisches

| Polyisocyanat, 100 %ig | 50,0 |
|---|---|
| n-Butylacetat | 50,0 |
| Gesamt | 100,0 |

Beispiele mit Härter (H):

| Beispiele | 1. + H | 2. + H | 3. + H |
|---|---|---|---|
| Mischungsverhältnis Stammlack/Härter | 25:1 | 10:1 | 25:1 |
| Festkörpergehalt der Lack/Härter-Mischung | 21,8 | 24,9 | 23,7 |
| Viskosität nach DIN 53211, 4-mm Becher in sec | ca. 50 | ca. 55 | ca. 50 |
| Potlife der gebrauchsfertigen Mischung in Std. | 8 | 2 | 8 |
| Glanzgrad (200 μm-Rakel auf Glas) bei 60°C | 90 | 80 | 90 |
| Staubtrocken (200 μm-Rakel auf Glas) in min. | 60 | 60 | 60 |
| Stapeltrocken (200 μm-Rakel auf Glas) in Std. | 8 | 12 | 8 |
| Beständigkeit nach DIN 68861, Beanspr.-Gruppe 1 B (außer Aceton): | erfüllt | erfüllt | erfüllt |
| Möbelfakta R 3: | erfüllt | erfüllt | erfüllt |
| PVC-Festigkeit, 1 Std. DOP | erfüllt | erfüllt | erfüllt |

Die erfindungsgemäßen wasserhaltigen Überzugsmittel können mit allen üblichen Applikationstechniken verarbeitet werden wie z.B. Walzen, Gießen und Spritzen (Becherpistole, Airless-, Airmix-, Niederdruck-, Zweikomponenten-Gerät, elektrostatische Spritzeinrichtung, Spritzautomat). Sie können als Grundlacke unter anderen Lackarten, als Überzugslacke auf anderen Beschichtungen und Substraten oder als Mehrschichtlacke, z.B. nach Zwischentrocknung und Zwischenschliff, eingesetzt werden. Die erzielten Lackfilme unterscheiden sich optisch nicht von den der entsprechenden Lösemittellacke.

**Patentansprüche**

1. Wäßrige, lagerstabile Überzugsmittel, enthaltend:
   wenigstens einen Celluloseester;
   wenigstens ein Kunst- und/oder Naturharz und/oder einen Weichmacher;
   wenigstens ein organisches Lösungsmittel;
   wenigstens ein Tensid als Emulgator;
   wenigstens ein Verdickungsmittel; sowie
   Wasser,
   **dadurch gekennzeichnet, daß**
   das Überzugsmittel zusätzlich ein Stabilisator-Tensid enthält, wobei das Stabilisator-Tensid eine siliziumorganische Verbindung ist;
   der Emulgator ein nichtionisches Tensid ist; und
   das Verdickungsmittel ein organisches Polymerharz ist.

2. Überzugsmittel nach Anspruch 1, dadurch gekennzeichnet, daß es wenigstens einen Weichmacher enthält, welcher ausgewählt ist aus der Gruppe bestehend aus:
   lacküblichen Weichmachern, insbesondere Phthalsäureestern, bevorzugt Dibutylphthalat, Diisobutylphthalat, Di-2-ethylhexylphthalat, Diisononylphthalat, Dibutylglykolphthalat; Adipinsäureestern, Sebacinsäureestern; Fettsäureestern; epoxidierten Fettsäuren; Phosphorsäureestern; reinen oder modifizierten Ölen pflanzlicher Herkunft, bevorzugt Rhizinusöl; sowie deren Derivaten.

3. Überzugsmittel nach Anspruch 1 oder 2, dadurch gekennzeichnet, daß der Celluloseester ausgewählt ist aus der Gruppe bestehend aus:
   Cellulosenitrat, Celluloseacetobutyrat, Celluloseacetopropionat und Celluloseacetat; sowie deren Mischungen.

4. Überzugsmittel nach einem der vorhergehenden Ansprüche, dadurch gekennzeichnet, daß die Kunstharze ausgewählt sind aus der Gruppe bestehend aus:
   Alkydharzen, Acrylatharzen, gesättigten Polyesterharzen, Maleinatharzen, Ketonharzen, Aldehydharzen, Carbamidsäureesterharzen, Vinylharzen; Polyetherharzen; sowie deren Copolymerisaten und Mischungen.

5. Überzugsmittel nach einem der vorhergehenden Ansprüche, dadurch gekennzeichnet, daß die Naturharze ausgewählt sind aus der Gruppe bestehend aus:
   Kolophoniumharzen, Balsamharzen, Schellack, Kopalen, Dammar; sowie deren Mischungen.

6. Überzugsmittel nach einem der vorhergehenden Ansprüche, dadurch gekennzeichnet, daß das organische Lösungsmittel ausgewählt ist aus der Gruppe bestehend aus:
   Estern, insbesondere n-Butylacetat, Isobutylacetat, Methoxypropylacetat, Ethoxypropylacetat, Butylglycolacetat, 3-Methoxy-n-butylacetat, Ethyllactat, Ethyl-(3-ethoxy)propionat; Ketonen, insbesondere Methylisobutylketon, Diisobutylketon, Cyclohexanon; Alkoholen, insbesondere n-Butanol, Isobutanol, 3-Methoxybutanol; aromatischen Kohlenwasserstoffen, insbesondere Toluol, Xylol, Solventnaphtha; sowie deren Mischungen

7. Überzugsmittel nach einem der vorhergehenden Ansprüche, dadurch gekennzeichnet, daß der Emulgator ausgewählt ist aus der Gruppe bestehend aus:
   nichtionischen Emulgatoren, insbesondere Alkylarylethoxylate, vorzugsweise solche mit einem Ethoxylierungsgrad von 15 bis 60 EO.

8. Überzugsmittel nach einem der vorhergehenden Ansprüche, dadurch gekennzeichnet, daß das Verdickungsmittel ein Polyurethanharz ist.

9. Überzugsmittel nach einem der vorhergehenden Ansprüche, dadurch gekennzeichnet, daß das Stabilisator-Tensid ein Polysiloxan, insbesondere ein polyether-modifiziertes Polysiloxan ist.

10. Überzugsmittel nach einem der vorhergehenden Ansprüche, dadurch gekennzeichnet, daß das Wasser eine Leitfähigkeit von unter 400 µS/cm bei 25°C, einen pH-Wert von ca. 8 sowie eine Säurekapazität zwischen 1,8 und 2,0 mmol/l aufweist.

11. Überzugsmittel nach einem der vorhergehenden Ansprüche, dadurch gekennzeichnet, daß das Überzugsmittel zusätzlich Pigmente, insbesondere anorganische und/oder organische Pigmente, und/oder Füllstoffe enthält.

12. Überzugsmittel nach einem der vorhergehenden Ansprüche, dadurch gekennzeichnet, daß das Überzugsmittel zusätzlich Hilfsstoffe enthält, welche ausgewählt sind aus der Gruppe bestehend aus:
Mattierungsmitteln, insbesondere auf Basis von Siliciumdioxid; Wachsen, insbesondere Polyethylen-, Polypropylen-, Polyamid- und Polytetrafluorethylenwachsen sowie Mischungen hiervon; Metallseifen, insbesondere Metallstearaten; Verlaufsmitteln; Entschäumern; Entgasungsmitteln; Gleitmitteln, Hydrophobierungsmitteln, Lichtschutzmitteln, Netzmitteln, Antiabsetzmitteln, Thixotropiemitteln; Antiausschwimmmitteln, sowie Mischungen aus diesen.

13. Überzugsmittel nach einem der vorhergehenden Ansprüche, dadurch gekennzeichnet, daß es die folgenden Stoffe enthält:
ca. 5-50 Gew.-%, vorzugsweise ca. 10-40 Gew.-% mindestens eines organischen Lösungsmittels,
ca. 0-30 Gew.-%, vorzugsweise ca. 0-15 Gew.-% Weichmacher,
ca. 0-40 Gew.-%, vorzugsweise ca. 5-30 Gew.-% Celluloseester,
ca. 0-40 Gew.-%, vorzugsweise ca.0-30 Gew.-% lackübliche Kunst- und/oder Naturharze,
ca. 0-40 Gew.-%, vorzugsweise ca. 0-30 Gew.-% lackübliche anorganische und/oder organische Pigmente und/oder Füllstoffe,
ca. 0-5 Gew.-%, vorzugsweise ca. 0-3 Gew.-% Wachse und/oder Metallseifen,
ca. 0-5 Gew.-%, vorzugsweise ca. 0-3 Gew.-% Mattierungsmittel auf Kieselsäurebasis,
ca. 0,1-5 Gew.-%, vorzugsweise ca. 0,1-4 Gew.-% Emulgatoren,
ca. 0-5 Gew.-%, vorzugsweise ca. 0,1-3 Gew.-% Stabilisatoren,
ca. 0-5 Gew.-%, vorzugsweise ca. 0-4 Gew.-% Verdickungsmittel, und
ca. 5-80 Gew.-%, vorzugsweise ca. 20-70 Gew.-% Wasser.

14. Überzugsmittel nach einem der vorhergehenden Ansprüche, dadurch gekennzeichnet, daß es über 40 Gew.-%, insbesondere über 50 Gew.-%, bevorzugt über 60 Gew.-%, besonders bevorzugt über 70 Gew.-%, weiter bevorzugt ca. 80 Gew.-% Wasser enthält.

15. Überzugsmittel nach einem der vorhergehenden Ansprüche, dadurch gekennzeichnet, daß es als Zweikomponentensystem ausgebildet ist, wobei die erste Komponente ein Überzugsmittel gemäß einem der Ansprüche 1 bis 14 ist; und
die zweite Komponente ein wasseremulgierbares Polyisocyanat mit reaktiven Isocyanatgruppen ist.

16. Überzugsmittel nach Anspruch 15, dadurch gekennzeichnet, daß die zweite Komponente eine Härterkomponente ist, welche ca. 10-100 Gew.-%, vorzugsweise ca. 20-80 Gew.-% wasseremulgierbares Polyisocyanat mit reaktiven Isocyanatgruppen sowie ca. 0-90 Gew.-%, vorzugsweise ca. 20-80 Gew.-% wenigstens eines organischen Lösemittels enthält.

17. Überzugsmittel nach Anspruch 15 oder 16, dadurch gekennzeichnet, daß die Härterkomponente einer Stammlösung der ersten Komponente in einem Gewichtsverhältnis von 1:50 bis 1:1 vorzugsweise 1:25 bis 1:4 zugesetzt wird.

18. Überzugsmittel nach einem der Ansprüche 11 bis 17, dadurch gekennzeichnet, daß das Pigment ausgewählt wird aus der Gruppe bestehend aus:
lacküblichen Farbpigmenten, insbesondere Titandioxid (Pigment White 6), Ruß (Pigment Black 7), Eisenoxidgelb (Pigment Yellow 42), Eisenoxidrot (Pigment Red 101), Phthalocyaninblau (Pigment Blue 15), Phthalocyaningrün (Pigment Green 7), organische Rotpigmente (Pigment Red 3, 5, 9, 48, 88, 112, 122, 146, 166, 170, 171, 184, 185, 194, 208, u.a.), organische Orangepigmente (Pigment Orange 22, 34, 51, 69, u.a.), organische Gelbpigmente (Pigment Yellow 3, 13, 16, 81, 83, 151, u.a.), organische Violettpigmente (Pigment Violet 19, 23 u.a.), organische Braunpigmente (Pigment Brown 22, 25, u.a.), sowie deren Mischungen.

19. Überzugsmittel nach einem der Ansprüche 11 bis 18, dadurch gekennzeichnet, daß der Füllstoff ausgewählt wird aus der Gruppe bestehend aus:
Kreide (Calciumcarbonat), Dolomit (Calcium-Magnesium-Carbonat), Schwerspat (Bariumsulfat), Leichtspat (Calciumsulfat), China Clay (Aluminiumsilikat), Talkum (Magnesiumsilikat), sowie deren Mischungen.